# EUROPEAN PATENT SPECIFICATION

(11) **EP 0 950 214 B1**
(45) Date of publication and mention of the grant of the patent: **24.04.2002**
(21) Application number: 97913297.4
(22) Date of filing: 19.11.1997
(51) Int. Cl.: G05B 19/18

(54) **METHOD OF CONTROLLING A MACHINE TOOL**
VERFAHREN ZUR STEUERUNG EINER WERKZEUGMASCHINE
PROCEDE SERVANT A COMMANDER UNE MACHINE OUTIL

(30) Priority: 09.01.1997 GB 9700333
(43) Date of publication of application: 20.10.1999
(73) Proprietor: Unova U.K. Limited, Aylesbury, Buckinghamshire HP20 2RQ (GB)
(72) Inventor: PICKLES, John, David, North Yorkshire BD23 5PN (GB); GRIFFITHS, Selwyn, Jonathan, Northampton NN3 3NF (GB)
(74) Representative: Nash, Keith Wilfrid
(86) International application number: GB9703164
(87) International publication number: WO9830942

(56) References cited:
- EP-A- 0 261 510
- EP-A- 0 265 607
- EP-A- 0 396 028
- DE-A- 19 621 239

## Description

### Field of the Invention

This invention relates to a method of controlling a machine tool so as to remove material from a rotating workpiece to form the latter into a desired shape which is circularly asymmetric about the axis of rotation of the workpiece. The invention is particularly applicable to machines for the grinding of workpieces such as, for example, crankpins and camshafts. The invention is also applicable to other machines, for example milling machines, brooch turning machines and turning machines (such as lathes).

### Background to the Invention

A workpiece rotating about an axis can be ground into parts which are circularly asymmetric with the axis of rotation by means of a grinding wheel which is moved laterally to that axis. In order to grind the parts rapidly, and to a high degree of geometric accuracy, a high performance servo system is used to control the movement of the grinding wheel towards and away from the workpiece as the latter rotates.

The servo system includes sensors for measuring the position of the wheel and the velocity with which it moves towards or away from the workpiece, and these are connected in respective position and velocity feedback loops which facilitate the accurate control of those parameters by a control computer. Typically, the position feedback loop has a bandwidth of 10 Hz and the bandwidth of the velocity feedback loop is 200 Hz.

The controlling computer can calculate very accurately the exact grinding wheel position required for any angular portion of the workpiece, (the workpiece angle) so as to generate the required offset diameter. The same computer can measure the instantaneous position of the grinding wheel (through the position feedback loop) at any workpiece angle by using a high speed, high accuracy measuring system such as a linear scale to a typical position resolution of 0.0001 mm.

The computer, knowing the required position and the actual position of the grinding wheel can calculate a position error and feed an error signal derived therefrom to the servo system controlling the movement of the grinding wheel, in order to correct its position and thereby minimise the position error for all workpiece angular positions.

In order to achieve the required geometric tolerances in the finished component, grinding wheel position errors of typically less than 0.001 mm are required.

However, it is difficult to maintain the required error envelope to achieve such accuracy, especially if the workpiece is to rotate at speeds of more than 20 rpm, as a result of the limited bandwidth of the position control loop. Furthermore, there is no correction of time varying contributions to the error (for example electronic or servo drift), which can become significant over a protracted period of time.

In document EP-A-0576043 there is disclosed an NC grinding machine having a workpiece spindle and a tool slide. During a setting up procedure the position changes of the spindle and slide are measured and compared with the "ideal profile data", enabling a decision to be made as to whether the machining accuracy of a finishied workpiece will be within predefined tolerances.

Document EP-A-0396028 also discloses relavant prior art.

It is therefore an object of the present invention to provide an improved control system and method for controlling a machine tool so as to achieve the desired error envelope with higher speeds of rotation of the workpiece.

### Summary of the Invention

According to the invention, there is provided a method of controlling a machine tool as defined in Claim 1.

The component and the workpiece are conveniently mounted on a frame of the machine. The component may be fixed relative to the frame, in which case said lateral movement is achieved by moving the workpiece laterally relative to the frame. Preferably, however, the axis of rotation of the workpiece is fixed relative to the frame anti said lateral relative movement is achieved by moving the component relative to the frame.

Preferably the machine tool is a grinder and the component comprises a grinding wheel.

A computer can measure very accurately the positional error of the grinding wheel at any workpiece angle. It has been found that this positional error is systematic for any given workpiece speed and grinding wheel position trajectory during any given period of time, and errors detected during one revolution do not have to be corrected "instantaneously" during that revolution, but can be compensated for during a subsequent revolution. Consequently, the control signal can be modified taking into account not only the required positions of the grinding wheel which compensate for previously measured errors, but also the required speed of advance or retraction of the grinding wheel (its positional velocity). This is significant because the velocity control feedback loop, with a bandwidth of typically 200 Hz, has a greater capacity to control the grinding wheel position at higher work speeds than the position feedback loop alone, in that the greater bandwidth permits a faster response to required change than in the case of the position feedback loop.

Preferably, the measurements of the positions of the component obtained for the portion of a signal relating to one revolution of the workpiece are used to modify the portion of the control signal for the next revolution.

Thus, for example, if the machine is a grinding machine, the control signal relating to the first revolution of the grinding cycle is used to provide initial measurements (before the cycle begins) which are used to modify the portion of the signal relating to the second revolution in the grinding cycle. Accordingly, during the first revolution of the grinding cycle, the grinding wheel is brought into engagement with the workpiece and moved in accordance with the theoretical (uncorrected) data for that revolution, and the grinding wheel then moves in accordance with the theoretical data, as corrected by the method, during the second revolution of the workpiece.

Where there is no need to maintain a record of the error correction, the data obtained for a given revolution of the workpiece may supersede error data obtained for a previous revolution, and the earlier data may be discarded.

Preferably, each measured position is the average of a plurality, of measured positions of the component corresponding to neighbouring angular positions of the workpiece in the same revolution thereof. Typically each is an average of ten measurements, which are taken at angular intervals in the region of 0.1 degrees (the angular intervals may vary depending on the required speed of rotation of the workpiece).

Preferably, the method also includes measuring the angular positions of the headstock or tailstock of the machine, and correlating those positions with the measured positions of the component.

Preferably, steps a) to d) of the method are performed shortly before the end of the process of removal of material from the workpiece.

### Brief Description of the Drawings

A method in accordance with the invention will now be described, by way of example, with reference to the accompanying drawings in which:
Figure 1 is a simplified diagrammatic side view of part of a grinding machine for performing the method;
Figure 2 is a more detailed perspective view of a grinding machine with which the method can be performed; and
Figure 3 is a schematic perspective representation of the machine shown in Figure 2, showing the axes along which various parts of the machine move.

### Detailed Description

The method can be performed by apparatus comprising a cylindrical grinding machine which has a frame 1 having a rotatable assembly (not shown) for supporting a workpiece 2, and means for rotating the workpiece in a controlled manner. The workpiece 2 is acted on by a grinding wheel 4, carried by a wheel-head assembly 6. The latter, and thus the grinding wheel 4, is movable laterally relative to the axis of rotation of the workpiece in the directions of the arrows 8. The wheel-head 6 is moved laterally by a worm drive comprising a threaded passage in a lug 10 on the wheel-head, and a threaded shaft 12 which is rotatably mounted on the frame 1 and which extends through the passage in the lug 10. The shaft is driven by a servo motor 14 which is fitted with a tachometer 16 for measuring the speed of rotation of the shaft 12. The velocity of the wheelhead 6, and hence the positional velocity of the wheel 4, can be derived from that measurement.

The wheelhead 6 carries a linear scale 18 which is read by a sensor 20 to determine the position of the wheelhead, and hence the wheel 4. The assembly on which the workpiece 2 is mounted includes an angular position sensor (not shown) which provides an indication of the angular position of the workpiece.

The sensors 16 and 20 form part of a servo system which includes a computer 22, for controlling the velocity and the position of the wheelhead assembly 6, and hence the grinding wheel 4, and which also includes velocity and position feedback loops. The angular position sensor is also connected to the computer 22.

Data on the theoretical positions of the wheel 4 during the grinding operation are stored in a memory in the computer 22. The latter is programmed to generate a control signal for the motor 14 and thereby controls the position (and positional velocity) of the wheel. The computer 22 is also arranged to compare the measured positions of the wheel 4 at various angular positions of the workpiece 2. This enables the computer to build up a table, for a given revolution of the workpiece, of wheel position error against workpiece angle. The computer is also arranged to use that table subsequently to modify the control signals so as to compensate for any errors.

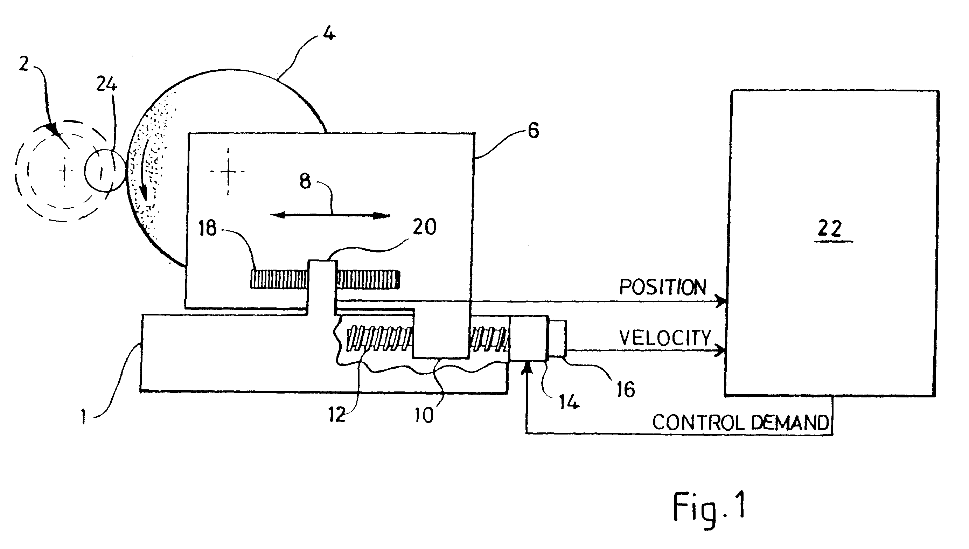

In this example, the workpiece 2 is in the form of a crankshaft having a number of crankpins, one of which is referenced 24, which are to be individually ground by the wheel. Thus, once the first crankpin has been ground by the wheel 4, the workpiece is moved axially, in a direction perpendicular to the plane of Figure 1, until the next crankpin region of the workpiece to be ground is in registry with the wheel 4, to permit grinding to begin. The grinding and repositioning steps are repeated until all the crankpins have been ground.

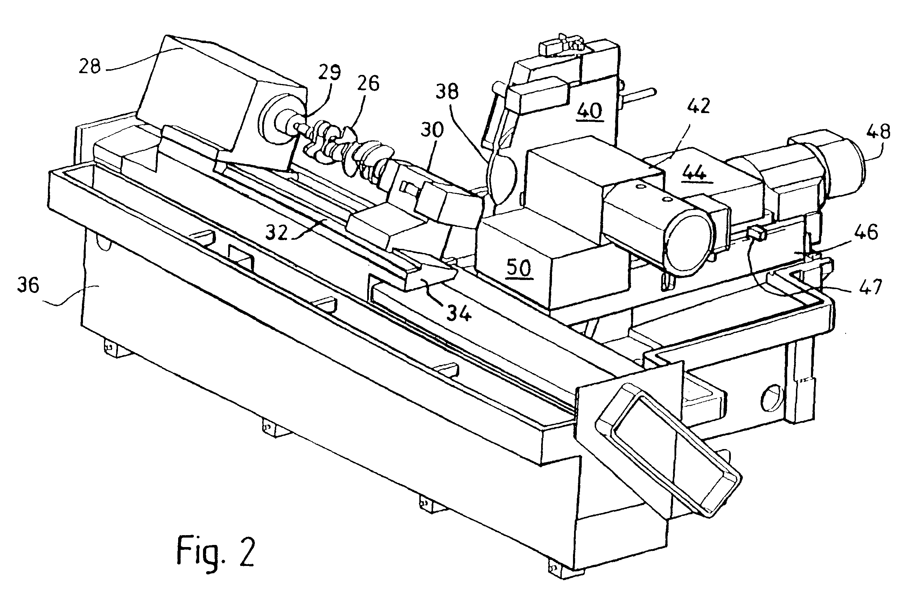

The machine shown in Figure 2 is operable to grind a crankshaft 26 which is mounted at one end in a headstock 28 having a rotatable spindle 29 on which the crankshaft 26 is angularly fixed. This contains a drive (not shown) for rotating the crankshaft about its major axis. The opposite end of the crankshaft 26 is rotatably mounted in a tailstock 30 which is slidably mounted on a slideway 32. The latter is located on a carriage 34 which also carries the headstock 28. Thus, the tailstock 30 can move towards or away from the headstock 28 to accommodate crankshafts of differing lengths, but the assembly of headstock and tailstock can be indexed as one for relocating the workpiece.

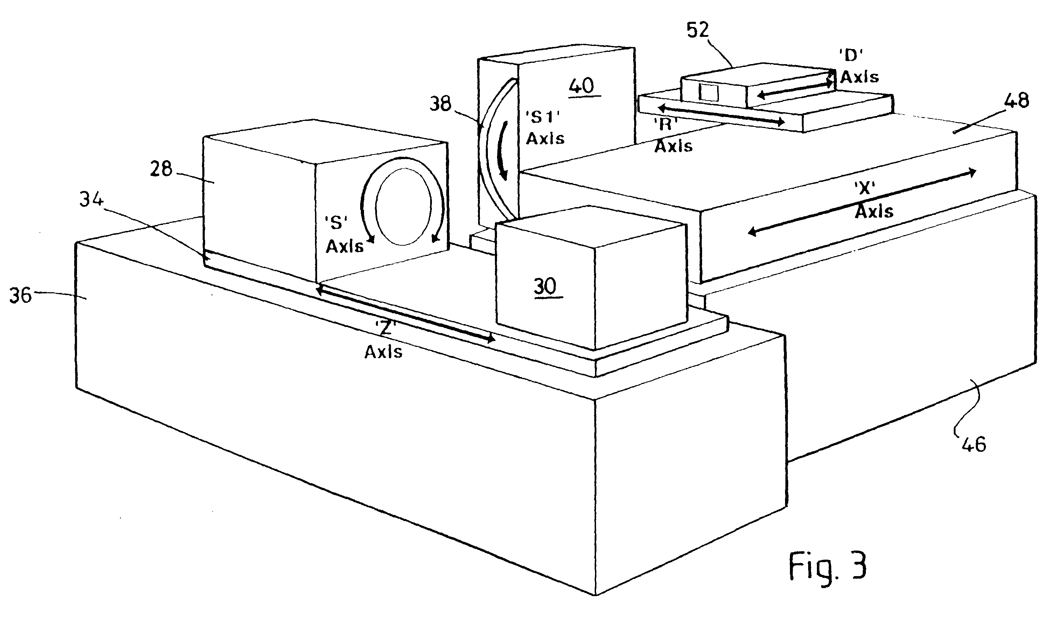

To this end the carriage 34 is slidable along a bed 36 and is connected to an indexing drive (not shown) for moving the carriage 34 along the bed 36, to bring each of the crankpins in turn into registry with a grinding wheel 38. This movement is indicated by the Z axis of Figure 3.

The wheel 38 is partially shrouded by a guard assembly 40, and is rotatably mounted on a drive 42 which is in turn fixed to a table 44 slidably carried on a bed 46. A further motor 48 operates a drive such as a worm drive (not shown), similar to the drive shown in the machine in Figure 1, for sliding the table 44, and hence the drive 42, the assembly 40 and the wheel 38 along the bed 46. The motor 48 therefore causes the wheel 38 to move horizontally towards and away from the crankshaft 26 in the direction of the "X" axis indicated in Figure 3. This movement causes the drive 42 to slide over a support block 50 which is attached to the bed 46.

A sensor 47 similar to the sensor 20 is also attached to the bed 46 and arranged to read a linear scale (not shown), similar to the scale 18, on the table 44.

Similarly, the motor 48 is fitted with a tachometer which serves the same purpose as the tachometer 16.

The machine also includes sensors for detecting the position of the headstock 28 and tailstock 30 on the bed 36, and the speeds of rotation of the crankshaft 26 and wheel 40, and an angular position sensor (not shown) for detecting the angular position of the spindle 29 in the headstock 28.

The outputs of these sensors are fed to a computer (not shown) which controls the position and speed of rotation of the crankshaft 26 and the wheel 38 so that each crankpin is ground in turn in accordance with the method described in relation to the machine shown in Figure 1.

After numerous grinding operations, the grinding surface of the wheel 38 may become irregular or worn. The grinding machine is therefore fitted with a wheel dresser 52 for removing any such irregularities, to ensure that the grinding surface of the wheel is cylindrical and concentric with the wheel axis of rotation. For the sake of clarity, the dresser 52 has been omitted from Figure 2.

With both the machines previously described, the compensation procedure can be integrated almost transparently into the production process as follows:-
On a given signal, for example on the start of each day, or on selection of a new component, or by operator demand, a "correction" cycle is initiated.

The grinding wheel 4 moves to the workpiece 2. The workpiece starts rotating at the angular velocity normally used to grind the part whilst simultaneously the grinding wheel 4 starts to move in the trajectory, computed from the theoretical position/velocity information stored in the memory, for a given revolution of the workpiece.

If the correction cycle is initiated before the start of the grinding process, the revolution is the first one of the grinding process. If, on the other hand, the correction cycle is initiated part way through the grinding process, the wheel is moved along the trajectory corresponding to the last revolution before the correction cycle was initiated, and any earlier corrections are ignored.

However, the computer applies an offset to the position signals for the grinding wheel so that, although the grinding wheel moves in a trajectory based on the theoretical data, it does not make contact with the crankshaft but is instead spaced from the crankshaft by a substantially constant distance.

Alternatively instead of the computer applying the offset, the compensation procedure may be performed when no workpiece is present on the grinding machine.

During the movement of the grinding wheel towards and away from the workpiece axis, a table of grinding wheel position errors with respect to workpiece angle is built up for the revolution of the workpiece.

This information is then used to correct the data for the next revolution of the workpiece in the grinding cycle.

The table is used to "correct" the signals developed by the computer 22 to determine the grinding wheel position AND VELOCITY. The significant thing is that by influencing the velocity controlling signal as well as the position signal, a better response is achieved, since the velocity control system has a bandwidth of typically 200 Hz and therefore has a greater capacity to control the grinding wheel position at high work speeds than does the position feedback loop.

At a selected point in the grinding cycle, typically close to final size, but not necessarily so, a revolution of the workpiece 2 is made with the grinding wheel 4 under little or no cutting load. The position errors during this revolution are mathematically smoothed and stored and used as the correction table during subsequent revolutions of the workpiece.

On machines equipped with a sizing gauge this will be an opportune time to stop the workpiece rotation, apply the gauge and calculate any size error.

After the gauge has been retracted, the grinding wheel 4 is again moved to the workpiece 2, the workpiece is re-started and rotated at the angular velocity required for grinding whilst simultaneously the wheel-head advance is restored to move the grinding wheel along the "corrected" trajectory, thereby to eliminate the measured errors.

In addition, the tables can include position errors obtained during the actual grinding of the workpiece. Those position errors are used to correct the control signals for subsequent revolutions of the workpiece.

As an option to the above cycle, position error tables from several successive grinds can be averaged and the resultant table smoothed to average out any possible errors emanating from the workpiece drive servo (not shown), that might arise due to grinding the same shape at different angles.

The above procedures can equally well be applied to the grinding of non-round parts such as cam-lobes, on a cylindrical grinder.

## Claims

1. A method of controlling a machine tool so that, in a machining cycle, a surface of a machining component (4) of the machine tool removes material from a workpiece (2) mounted on the machine tool for rotation about a defined axis, so as to form the workpiece into a desired circularly asymmetric shape, the method comprising the steps of:
a) generating a control signal which is derived from data of theoretical positions and positional velocities of the machining component (4) relative to the axis, and which causes the machining component (4) to move in directions relative to the axis;
b) for at least one revolution of the workpiece (2) in the machining cycle, measuring the positions of the machining component (4) relative to the axis;
c) comparing measured positions with corresponding theoretical positions and storing data indicative of any differences between the measured and theoretical positions;
d) modifying the control signal relating to a subsequent revolution of the workpiece so as to compensate for said differences and thereby reduce the magnitude of any error which would have resulted from the measured positional differences;
e) bringing said surface of the machining component (4) into engagement with the workpiece in accordance with the control signal as modified, and performing the machining cycle, wherein steps a) and b) above are performed while said surface of the machining component (4) is not in contact with the workpiece (2), and
f) wherein the workpiece is already mounted on the machine during steps a) to d), and the movement of the machining component (4) and the measurement of its position occurs during actual revolutions of the workpiece (2).

2. A method according to claim 1, in which the component and a headstock and tailstock for receiving the workpiece are mounted on a bed of the machine, the axis of rotation of the workpiece being fixed relative to the bed and any relative lateral movement of the component being achieved by moving the component relative to the bed.

3. A method according to any one of the preceding claims, in which the machine tool is a grinder and the machining component comprises a grinding wheel.

4. A method according to any one of the preceding claims, in which the measurements of the positions of the machining component relating to the portion of the control signal for one revolution of the workpiece are used to modify the portion of the control signal for the next revolution.

5. A method according to claim 4 in which the data obtained from the portion of the signal for a given revolution of the workpiece supersedes data obtained from the portion of the signal for a previous revolution, and the earlier data is discarded.

6. A method according to any one of the preceding claims in which each measured position of the machining component is the average of a plurality of measured positions for neighbouring angular positions of the workpiece for a given revolution.

7. A method according to any one of the preceding claims, in which removal of material from the workpiece has occurred during previous revolutions thereof on the machine tool, before steps a) to e) are performed.

8. A method according to claim 7, in which said steps are performed shortly before the end of the process of removal of material from the workpiece.

9. A method according to any one of the preceding claims, in which the machine has a headstock and tailstock on which, in use, the workpiece is mounted, and the method includes the step of measuring the angular position of the headstock or the tailstock for each measured position of the workpiece, wherein both sets of measurements are correlated with each other in the course of modifying the data for the signal.

## Patentansprüche

1. Verfahren zur Steuerung einer Werkzeugmaschine in der Weise, dass in einem Bearbeitungszyklus eine Oberfläche einer bearbeitenden Komponente (4) der Werkzeugmaschine Material von einem Werkstück (2) abnimmt, das auf der Werkzeugmaschine drehbar um eine fest vorgegebene Achse befestigt ist, damit das Werkstück in eine gewünschte kreisförmig asymmetrische Form gebracht wird, **dadurch gekennzeichnet, dass**
a) ein Steuersignal erzeugt wird, das aus Daten von theoretischen Positionen und Positions-Geschwindigkeiten der bearbeitenden Komponente (4) relativ zu der Achse abgeleitet wird und das bewirkt, dass die bearbeitende Komponente (4) in Richtungen relativ zur Achse verschoben wird,
b) während mindestens eine Umdrehung des Werkstückes (2) im Bearbeitungszyklus die Positionen der bearbeitenden Komponente (4) relativ zur Achse gemessen werden,
c) gemessene Positionen mit entsprechenden theoretischen Positionen verglichen und Daten gespeichert werden, die Unterschiede zwischen den gemessenen und den theoretischen Positionen anzeigen,
d) das Steuersignal in bezug auf eine nachfolgende Umdrehung des Werkstückes so modifiziert wird, dass die Unterschiede kompensiert werden und damit die Größe eines Fehlers reduziert wird, der sich aus den gemessenen Positionsunterschieden ergeben hätte,
e) die Oberfläche der bearbeitenden Komponente (4) in Eingriff mit dem Werkstück in Übereinstimmung mit dem modifizierten Steuersignal gebracht wird, und der Bearbeitungszyklus durchgeführt wird, wobei die Schritte a) und b) ausgeführt werden, während die Oberfläche der bearbeitenden Komponente (4) nicht in Kontakt mit dem Werkstück (2) steht, und
f) wobei das Werkstück während der Schritte a) bis d) bereits auf der Maschine festgelegt ist, und die Bewegung der bearbeitenden Komponente (4) sowie die Messung ihrer Position während aktueller Umdrehungen des Werkstückes (2) auftritt.

2. Verfahren nach Anspruch 1, bei dem die Komponente sowie ein Spindelstock und Reitstock zur Aufnahme des Werkstückes auf einem Bett der Maschine befestigt werden, die Drehachse des Werkstückes relativ zum Bett fixiert wird, und jede relative seitliche Bewegung der Komponente durch Verschieben der Komponente relativ zum Bett erzielt wird.

3. Verfahren nach Anspruch 1 oder 2, bei dem die Werkzeugmaschine eine Schleifmaschine ist und die bearbeitende Komponente eine Schleifscheibe aufweist.

4. Verfahren nach einem der vorausgehenden Ansprüche, bei dem die Messungen der Positionen der bearbeitenden Komponente in bezug auf den Teil des Steuersignals für eine Umdrehung des Werkstückes verwendet werden, um den Teil des Steuersignals für die nächste Umdrehung zu modifizieren.

5. Verfahren nach Anspruch 4, bei dem die Daten, die aus dem Teil des Signals für eine gegebene Umdrehung des Werkstückes Daten aufheben, die von dem Teil des Signals für eine vorausgehende Umdrehung erhalten werden, und die früheren Daten beseitigt werden.

6. Verfahren nach einem der vorausgehenden Ansprüche, bei dem jede gemessene Position der verarbeitenden Komponente der Mittelwert einer Vielzahl von gemessenen Positionen für benachbarte Winkelpositionen des Werkstückes für eine gegebene Umdrehung ist.

7. Verfahren nach einem der vorausgehenden Ansprüche, bei dem das Entfernen von Material von dem Werkstück während vorausgehener Umdrehungen auf der Werkzeugmaschine vorgenommen worden ist, bevor die Schritte a) bis e) ausgeführt werden sind.

8. Verfahren nach Anspruch 7, bei dem die Schritte kurz vor dem Ende des Vorgangs des Entfernens von Material von dem Werkstück ausgeführt werden.

9. Verfahren nach einem der vorausgehenden Ansprüche, bei dem die Maschine einen Spindelstock und einen Reitstock aufweist, auf denen im Betrieb das Werkstück festgelegt wird, und das Verfahren den Schritt des Messens der Winkelposition des Spindelstockes oder des Reitstockes für jede gemessene Position des Werkstückes mit einschließt, wobei beide Sätze von Messungen miteinander im Laufe der Modifizierung der Daten für das Signal in Beziehung gesetzt werden.

## Revendications

1. Procédé de commande d'une machine-outil de telle sorte que dans un cycle d'usinage, une surface d'un composant d'usinage (4) de la machine-outil enlève de la matière d'une pièce à usiner (2) montée sur la machine-outil en vue de sa rotation autour d'un axe défini, de manière à façonner la pièce à usiner suivant une dorme souhaitée circulairement asymétrique, le procédé comprenant les étapes consistant à :
a) générer un signal de commande qui est dérivé de données de positions et de vitesses positionnelles théoriques du composant d'usinage (4) par rapport à l'axe, et qui entraîne le déplacement du composant d'usinage (4) dans des directions par rapport à l'axe;
b) au cours d'au moins un tour de la pièce à usiner (2) dans le cycle d'usinage, mesurer les positions du composant d'usinage (4) par rapport à l'axe ;
c) comparer les positions mesurées avec des positions théoriques correspondantes et stocker les données indiquant toutes différences entre les positions mesurées et théoriques ;
d) modifier le signal de commande relatif à un tour suivant de la pièce à usiner de manière à compenser lesdites différences et à ainsi réduire l'amplitude de toute erreur qui aurait résulté des différences de position mesurées ;
e) amener ladite surface du composant d'usinage (4) en engagement avec la pièce à usiner conformément au signal de commande tel que modifié, et réaliser le cycle d'usinage, les étapes a) et b) ci-dessus étant effectuées pendant que ladite surface du composant d'usinage (4) n'est pas en contact avec la pièce à usiner (2), et
f) la pièce à usiner étant déjà montée sur la machine au cours des étapes a) à d), et le mouvement du composant d'usinage (4) et la mesure de sa position ayant lieu au cours de tours effectifs de la pièce à usiner (2).

2. Procédé selon la revendication 1, dans lequel le composant et une poupée et une contre-poupée pour recevoir la pièce à usiner sont montés sur un lit de la machine, l'axe de rotation de la pièce à usiner étant fixe par rapport au lit et tout mouvement latéral relatif du composant étant effectué en déplaçant le composant par rapport au lit.

3. Procédé selon l'une quelconque des revendications précédentes, dans lequel la machine-outil est une meuleuse et le composant d'usinage comprend une meule.

4. Procédé selon l'une quelconque des revendications précédentes, dans lequel les mesures des positions du composant d'usinage relativement à la portion du signal de commande pour un tour de la pièce à usiner sont utilisées pour modifier la portion du signal de commande pour le tour suivant.

5. Procédé selon la revendication 4, dans lequel les données obtenues à partir de la portion du signal pour un tour donné de la pièce à usiner remplacent les données obtenues de la portion du signal pour un tour précédent, et les données antérieures sont effacées.

6. Procédé selon l'une quelconque des revendications précédentes, dans lequel chaque position mesurée du composant d'usinage est la moyenne d'une pluralité de positions mesurées pour des positions angulaires adjacentes de la pièce à usiner pour un tour donné.

7. Procedé selon l'une quelconque des revendications précédentes, dans lequel l'enlèvement de matière de la pièce à usiner a eu lieu au cours de tours précédents de celle-ci sur la machine-outil, avant d'effectuer les étapes a) à e).

8. Procédé selon la revendication 7, dans lequel lesdites étapes sont effectuées peu avant la fin du processus d'enlèvement de matière de la pièce à usiner.

9. Procédé selon l'une quelconque des revendications précédentes, dans lequel la machine a une poupée et une contre-poupée sur lesquelles, en fonctionnement, la pièce à usiner est montée, et le procédé comporte l'étape consistant à mesurer la position angulaire de la poupée ou de la contre-poupée pour chaque position mesurée de la pièce à usiner, les deux jeux de mesures étant corrélés l'un à l'autre au cours de la modification des données pour le signal.
